(19) Europäisches Patentamt

European Patent Office

Office européen des brevets

(11) **EP 1 231 732 A1**

(12) **EUROPÄISCHE PATENTANMELDUNG**

(43) Veröffentlichungstag:
**14.08.2002 Patentblatt 2002/33**

(51) Int Cl.⁷: **H04L 1/00**, H04L 1/18,
H04B 10/10, H04B 10/00

(21) Anmeldenummer: **02360038.0**

(22) Anmeldetag: **23.01.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **03.02.2001 DE 10104912**

(71) Anmelder: **ALCATEL**
**75008 Paris (FR)**

(72) Erfinder: **Weis, Bernd X., Dr.**
**70825 Korntal-Münchingen (DE)**

(74) Vertreter: **Urlichs, Stefan, Dipl.-Phys. et al**
**Alcatel**
**Intellectual Property Department,**
**Stuttgart**
**70430 Stuttgart (DE)**

(54) **Verfahren zur Übertragung eines optischen Signals durch den freien Raum**

(57) Ein Verfahren zum Übertragen eines Signals zur Übermittlung von Information von einer Signalquelle (1) zu einer räumlich davon entfernten Signalsenke (7), wobei das Signal zumindest über einen Teil der Strecke zwischen der Signalquelle und der Signalsenke als optisches Signal über mindestens eine freie optische Wegstrecke zwischen einem optischen Sender (3) und einem optischen Empfänger (5) übermittelt wird, ist dadurch gekennzeichnet, dass das zu übertragende Signal vor seiner Übertragung in Signalpakete (SP) aufgespaltet wird, dass jedem Signalpaket eine für das Signalpaket charakteristische Signalsequenz (OH) beigeordnet und zusammen mit dem jeweiligen Signalpaket mit einer höheren Bitrate als das ursprüngliche Signal übertragen wird, und dass die charakteristischen Signalsequenzen zur Erkennung und gegebenenfalls zur Korrektur von Fehlern im übertragenen Signal und/oder zur Synchronisierung der Übertragungsstrecke verwendet werden. Damit kann mit einfachsten Mitteln eine zuverlässige Übermittlung von optischen Signalen durch den freien Raum sichergestellt werden.

Fig. 2

**Beschreibung**

Die Erfindung betrifft ein Verfahren zum Übertragen eines Signals zur Übermittlung von Information von einer Signalquelle zu einer räumlich davon entfernten Signalsenke, wobei das Signal zumindest über einen Teil der Strecke zwischen der Signalquelle und der Signalsenke als optisches Signal über mindestens eine freie optische Wegstrecke zwischen einem optischen Sender und einem optischen Empfänger übermittelt wird. Weiter betrifft die Erfindung auch Computerprogramme und Vorrichtungen zur Unterstützung und Durchführung eines derartigen Verfahrens, insbesondere geeignete Signalübertragungseinrichtungen, Servereinheiten, Prozessorbaugruppen und programmierbare Gate-Array-Baugruppen.

Ein solches Verfahren ist bekannt aus der EP 0 962 795 A2.

In einigen Fällen der Signalübertragung kann es vorteilhaft sein, optische Signale über den freien Raum zu übermitteln, anstatt optische Trägermedien wie beispielsweise optische Fasern zu verwenden. Die optische Signalübermittlung über den freien Raum bringt vor allem Kostenvorteile mit sich, wenn die zu überwindenden Distanzen kurz sind und wenn die Sichtstrecke im wesentlichen ungestört ist. In der oben genannten EP 0 962 795 A1 beispielsweise wurde die Übertragung von optischen Signalen für eine Kommunikation zum Austausch von Daten zwischen zwei räumlich voneinander getrennten Geräten eingesetzt.

Eine optische Kommunikationsverbindung über den freien Raum setzt allerdings eine freie Sichtlinie ohne Hindernisse voraus, so dass nichts mit dem optischen Signal auf der Strecke interferieren kann. Falls Hindernisse auftauchen können, beispielsweise wenn ein Vogel oder ein Regentropfen den Lichtstrahl kreuzt, sind Mechanismen erforderlich, die eine fehlerfreie Übertragung sicherstellen.

Aufgabe der vorliegenden Erfindung ist es demgegenüber, ein Verfahren der eingangs beschriebenen Art mit möglichst einfachen Mitteln dahingehend weiterzubilden, dass eine zuverlässige Übermittlung von optischen Signalen durch den freien Raum sichergestellt wird.

Erfindungsgemäß wird diese Aufgabe auf ebenso überraschend einfache wie wirkungsvolle Art und Weise dadurch gelöst, dass das zu übertragende Signal vor seiner Übertragung in Signalpakete aufgespaltet wird, dass jedem Signalpaket eine für das Signalpaket charakteristische Signalsequenz beigeordnet und zusammen mit dem jeweiligen Signalpaket mit einer höheren Bitrate als das ursprüngliche Signal übertragen wird, und dass die charakteristischen Signalsequenzen zur Erkennung und gegebenenfalls zur Korrektur von Fehlern im übertragenen Signal und/oder zur Synchronisierung der Übertragungsstrecke verwendet werden.

Das erfindungsgemäße Verfahren bietet eine einfache Methode für eine zuverlässige und fehlerfreie Übertragung von optischen Signalen durch den freien Raum. Vor der eigentlichen Informationsübertragung werden die beiden Stationen, zwischen denen die Übertragung über die freie optische Wegstrecke stattfindet, nämlich der optische Sender und der optische Empfänger synchronisiert. Sobald dies erfolgt ist, wird eine Synchronisation der Signalpakete durch eine geeignete Zustandsmaschine erreicht, die mit Hilfe der Auswertung der Fehler-Korrektur-Fähigkeiten des jeweiligen Signalpakets betrieben wird. Dies bedeutet, dass in dem Fall, wenn das System Fehler in einer Anzahl von aufeinanderfolgenden Signalpaketen detektiert, angenommen wird, dass das System "außer Tritt" geraten ist und resynchronisiert werden muss.

Besonders bevorzugt ist eine Variante des erfindungsgemäßen Verfahrens, bei der die Signalpakete erneut übertragen werden, wenn bei Erkennung eines Fehlers dieser nicht korrigiert werden kann.

Bei einer weiteren, besonders vorteilhaften Variante des erfindungsgemäßen Verfahrens ist vorgesehen, dass zur Übertragung der Signalpakete eine

$$\text{Bitrate } (X + N) \cdot (1 + p) \text{ bit/s}$$

gewählt wird, wobei

$X =$ Bitrate des zu übertragenden Signals,
$N =$ Bitrate der charakteristischen Signalsequenz,
$p =$ Wahrscheinlichkeit, dass ein Signalpaket aufgrund eines Übertragungsfehlers erneut übertragen werden muss.

Eine weitere besonders bevorzugte Variante des erfindungsgemäßen Verfahrens sieht vor, dass die zu übertragenden Signalpakete quellenseitig und die übertragenen Signalpakete empfängerseitig jeweils in einem Pufferspeicher zwischengespeichert werden. Dadurch können Verzögerungen in der Laufstrecke der verschiedenen optischen Signale durch geeignetes Timing der Signalübertragung auf der freien optischen Wegstrecke problemlos kompensier werden.

Das Timing ist bei dieser Art der Signalübertragung entscheidend um einen unnötigen Verwaltungs- "Overhead" zu vermeiden. Um diesen Mechanismus technisch machbar zu gestalten, müssen die Signale senderseitig und empfängerseitig gepuffert werden. Der konstante Signalfluss wird durch ein geeignetes Puffermanagement sichergestellt.

In einer weiteren vorteilhaften Verfahrensvariante wird als charakteristische Signalsequenz eine an sich bekannte CRC (=cyclic redundancy check)-Summe gewählt.

Signale zur Informationsübertragung werden üblicherweise in einer Rahmenstruktur übermittelt. Typische Rahmenstrukturen hierfür sind die STM-N (=synchronous transport modul)-Rahmen in SDH (=synchronous digital hierarchy)-Technologie.

Alternativ können aber beispielsweise auch die zu übertragenden Signale in einem OTM (= optical transport module) - Rahmen strukturiert werden. Dabei wird von der relativ neuen OTH (=optical transport hierarchy) für optische Kanäle Gebrauch gemacht.

Andere Signalübertragungsmechanismen sind beispielsweise die SONET- oder die ATM-Technologie.

Ganz besonders bevorzugt ist eine Variante des erfindungsgemäßen Verfahrens, die sich dadurch auszeichnet, dass das zu übertragende Signal in zwei oder mehr identische Signale vervielfältigt bzw. aufgespaltet wird, dass jedes dieser untereinander identischen Signale jeweils als optisches Signal über einen eigenen optischen Pfad, der mindestens eine freie optische Wegstrecke umfasst, von einem optischen Sender zu einem optischen Empfänger übertragen wird, und dass die empfangenen Signale über einen Signalkombinierer zusammengefasst und als einziges Signal der Signalsenke zugeführt werden.

Dadurch kann auf einem von der erfindungsgemäßen Signalpaketierung und Zuordnung von charakteristischen Signalsequenzen völlig unabhängigen Weg nochmals sichergestellt werden, dass Übertragungsfehler, wie sie beispielsweise bei einer Unterbrechung der freien optischen Wegstrecke auftreten können, wenn ein Hindernis wie etwa ein Vogel, ein Staubpartikel, ein Regentropfen oder eine Schneeflocke in die Sichtlinie geraten, absolut zuverlässig vermieden werden.

In den Rahmen der vorliegenden Erfindung fällt auch eine Signalübertragungseinrichtung zur Unterstützung dieser erfindungsgemäßen Verfahrensvariante mit einer Signalquelle zur Erzeugung eines zu übertragenden Signals, einem Signalaufspalter zum Vervielfältigen bzw. Aufspalten dieses Signals in zwei oder mehr identische Signale, einer der Anzahl dieser untereinander identischen Signale entsprechenden Menge von optischen Pfaden, von denen jeder mindestens eine freie optische Wegstrecke umfasst, einem oder mehreren optischen Empfängern zum Empfang der übertragenen optischen Signale, sowie einem Signalkombinierer, in welchem die übertragenen Signale zusammengefasst und als einziges Signal einer Signalsenke zugeführt werden können.

Weiterhin fällt in den Rahmen der vorliegenden Erfindung auch eine Servereinheit, eine Prozessor-Baugruppe sowie eine Gate-Array-Baugruppe zur Unterstützung des oben beschriebenen erfindungsgemäßen Verfahrens sowie ein Computerprogramm zur Durchführung des Verfahrens. Das Verfahren kann sowohl als Hardwareschaltung, als auch in Form eines Computerprogramms realisiert werden. Heutzutage wird eine Software-Programmierung für leistungsstarke DSP's bevorzugt, da neue Erkenntnisse und Zusatzfunktionen leichter durch eine Veränderung der Software auf bestehender Hardwarebasis implementierbar sind. Verfahren können aber auch als Hardwarebausteine in Einrichtungen zur Signalübertragung, beispielsweise in einem IP (=Internet Protocol)-Netzwerk oder einer Telekommunikationsanlage implementiert werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:

Fig.1 ein Prinzipbild der Funktionsweise der erfindungsgemäßen Signalübertragung mittels mehrerer untereinander identischer optischer Signale, die jeweils über eine eigene freie optische Wegstrecke gesendet werden; und

Fig.2 ein Schema für eine mögliche Aufteilung des zu übermittelnden Signals in diverse Signalpakete entsprechend dem erfindungsgemäßen Verfahren.

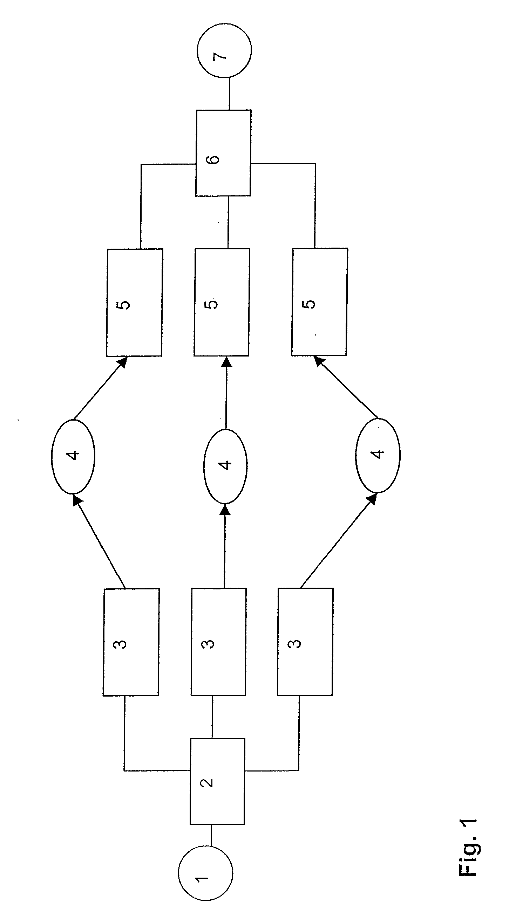

In Fig. 1 ist eine Signalübertragungseinrichtung zur Unterstützung der oben beschriebenen erfindungsgemäßen Verfahrensvariante dargestellt, in welcher eine Aufspaltung des zu übertragenden Signals in mehrere identische Signale mit gleichem Informationsgehalt wie das Ursprungssignal und Übermittlung derselben über jeweils eine eigene freie optische Wegstrecke vorgesehen ist.

Dabei wird das zu übertragende Signal in einer Signalquelle 1 erzeugt. An dieser Stelle kann es sich beispielsweise noch um ein elektrisches Signal, aber auch schon um ein optisches Signal handeln. In einem nachgeschalteten Signalaufspalter 2 wird nun das zu übertragende Signal in mehrere identische Signale, im vorliegenden Fall in drei Signale vervielfältigt, die jeweils einem optischen Sender 3, insbesondere einem Laser zugeführt werden. Von hier aus werden die optischen Signale auf jeweils einer eigenen freien optischen Wegstrecke, auf der sich auch optische Relais 4 wie Verstärker oder Umlenkeinrichtungen befinden können, zu jeweils einem zugehörigen optischen Empfänger 5 gesendet. Die empfangenen Signale der diversen optischen Empfänger 5 werden einem Signalkombinierer 6 zugeführt, wo sie zu einem einzigen Signal zusammengefasst und an eine Signalsenke 7 übertragen werden, die das Ziel der gesamten Signalübertragung darstellt.

Das erfindungsgemäße Verfahren kann aber auch in einer erheblich einfacheren Signalübertragungseinrichtung mit lediglich einer einzigen freien optischen Wegstrecke durchgeführt werden.

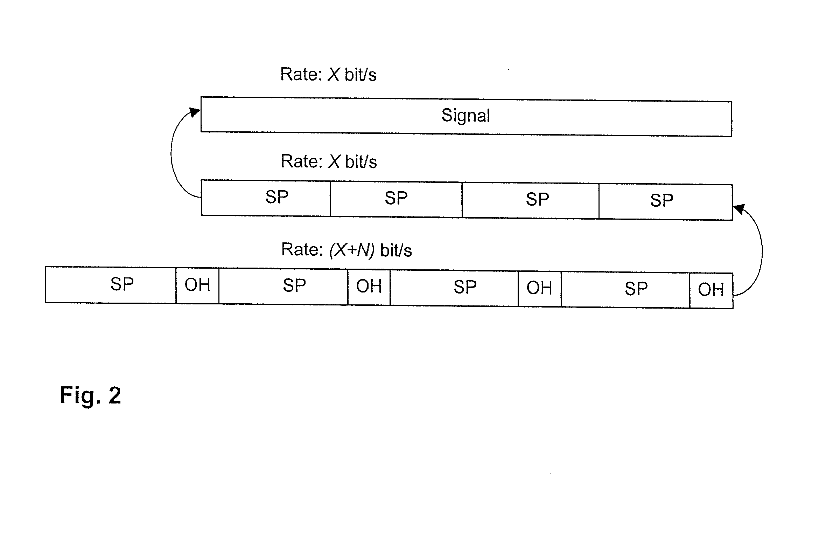

Entscheidend beim erfindungsgemäßen Verfahren ist eine Aufspaltung des zu übertragenden Signals vor seiner Übertragung in verschiedene Signalpakete SP, wie sie schematisch im mittleren Teil von Fig. 2 dargestellt sind. Anschließend wird jedem Signalpaket SP eine für das jeweilige Signalpaket SP charakteristische Signalsequenz OH beigeordnet und zusammen mit dem jeweiligen Signalpaket SP mit einer höheren Bitrate als das ursprüngliche Signal übertragen, wie im unteren Teil der Fig. 2 angedeutet ist. Wenn die Bitrate für das ursprüngliche Signal X bit/s betrug, so wird das aufgespaltete Signal zusammen mit den charakteristischen Signalsequenzen OH mit einer Rate von (X+N) bit/s übertragen.

Die charakteristischen Signalsequenzen OH werden anschließend zur Erkennung und gegebenenfalls zur Korrektur von Fehlern im übertragenen Signal und/oder zur Synchronisierung der Übertragungsstrecke verwendet.

## Patentansprüche

1. Verfahren zum Übertragen eines Signals zur Übermittlung von Information von einer Signalquelle (1) zu einer räumlich davon entfernten Signalsenke (7), wobei das Signal zumindest über einen Teil der Strecke zwischen der Signalquelle (1) und der Signalsenke (7) als optisches Signal über mindestens eine freie optische Wegstrecke zwischen einem optischen Sender (3) und einem optischen Empfänger (5) übermittelt wird,
**dadurch gekennzeichnet,**
**dass** das zu übertragende Signal vor seiner Übertragung in Signalpakete (SP) aufgespaltet wird,
**dass** jedem Signalpaket (SP) eine für das Signalpaket (SP) charakteristische Signalsequenz (OH) beigeordnet und zusammen mit dem jeweiligen Signalpaket (SP) mit einer höheren Bitrate als das ursprüngliche Signal übertragen wird,
und **dass** die charakteristischen Signalsequenzen (OH) zur Erkennung und gegebenenfalls zur Korrektur von Fehlern im übertragenen Signal und/ oder zur Synchronisierung der Übertragungsstrecke verwendet werden.

2. Verfahren nach Anspruch 1, **dadurch gekennzeichnet, dass** die Signalpakete (SP) erneut übertragen werden, wenn bei Erkennung eines Fehlers dieser nicht korrigiert werden kann.

3. Verfahren nach Anspruch 2, **dadurch gekennzeichnet, dass** zur Übertragung der Signalpakete (SP) eine

$$\text{Bitrate } (X + N)^{\cdot}(1 + p) \text{ bit/s}$$

gewählt wird, wobei

X = Bitrate des zu übertragenden Signals,
N = Bitrate der charakteristischen Signalsequenz (OH),
p = Wahrscheinlichkeit, dass ein Signalpaket (SP) aufgrund eines Übertragungsfehlers erneut übertragen werden muss.

4. Verfahren nach einem der vorhergehenden Ansprüche, **dadurch gekennzeichnet, dass** die zu übertragenden Signalpakete (SP) quellenseitig und die übertragenen Signalpakete (SP) empfängerseitig jeweils in einem Pufferspeicher zwischengespeichert werden.

5. Verfahren nach einem der vorhergehenden Ansprüche, **dadurch gekennzeichnet, dass** als charakteristische Signalsequenz (OH) eine CRC (=cyclic redundancy check) — Summe gewählt wird.

6. Verfahren nach einem der vorhergehenden Ansprüche, **dadurch gekennzeichnet, dass** die zu übertragenden Signale in einem STM-N (= synchronous transport module) — Rahmen strukturiert werden.

7. Verfahren nach einem der vorhergehenden Ansprüche, **dadurch gekennzeichnet, dass** die zu übertragenden Signale in einem OTM (= optical transport module) — Rahmen strukturiert werden.

8. Verfahren nach einem der vorhergehenden Ansprüche, **dadurch gekennzeichnet, dass** das zu übertragende Signal in zwei oder mehr identische Signale vervielfältigt bzw. aufgespaltet wird, dass jedes dieser untereinander identischen Signale jeweils als optisches Signal über einen eigenen optischen Pfad, der mindestens eine freie optische Wegstrecke umfasst, von einem optischen Sender (3) zu einem optischen Empfänger (5) übertragen wird, und dass die empfangenen Signale über einen Signalkombinierer (6) zusammengefasst und als einziges Signal der Signalsenke (7) zugeführt werden.

9. Signalübertragungseinrichtung zur Durchführung des Verfahrens nach Anspruch 8 mit einer Signalquelle (1) zur Erzeugung eines zu übertragenden Signals, einem Signalaufspalter (2) zum Vervielfältigen bzw. Aufspalten dieses Signals in zwei oder mehr identische Signale, einer der Anzahl dieser untereinander identischen Signale entsprechenden Menge von optischen Pfaden, von denen jeder mindestens eine freie optische Wegstrecke umfasst, einem oder mehreren optischen Empfängern (5) zum Empfang der übertragenen optischen Signale, sowie einem Signalkombinierer (6), in welchem die übertragenen Signale zusammengefasst und als einziges Signal einer Signalsenke (7) zugeführt werden können.

Fig. 1

Fig. 2

**Europäisches Patentamt**

## EUROPÄISCHER RECHERCHENBERICHT

Nummer der Anmeldung

EP 02 36 0038

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 01 06663 A (DAVIS CHRISTOPHER C) 25. Januar 2001 (2001-01-25) * Zusammenfassung * * Seite 2, Zeile 9 - Seite 3, Zeile 7 * * Seite 4, Zeile 3 - Zeile 10 * * Seite 9, Zeile 25 - Seite 10, Zeile 1 * * Seite 21, Zeile 14 - Zeile 15 * * Seite 21, Zeile 26 - Seite 22, Zeile 1 * * Seite 32, Zeile 10 - Zeile 14 * --- | 1-9 | H04L1/00 H04L1/18 H04B10/10 H04B10/00 |
| X | WO 95 20845 A (LEE COMMUNICATIONS LTD ;EMMETT JOHN ROBERT (GB)) 3. August 1995 (1995-08-03) * Zusammenfassung * * Seite 4, Zeile 21 - Zeile 28; Abbildungen 1,2 * --- | 9 | |
| A | OZUGUR T ET AL: "ARQ protocol for infrared wireless LANs: packet-level ACK or no-packet-level ACK?" UNIVERSAL PERSONAL COMMUNICATIONS, 1998. ICUPC '98. IEEE 1998 INTERNATIONAL CONFERENCE ON FLORENCE, ITALY 5-9 OCT. 1998, NEW YORK, NY, USA,IEEE, US, 5. Oktober 1998 (1998-10-05), Seiten 1235-1239, XP010315010 ISBN: 0-7803-5106-1 * das ganze Dokument * --- | 2,3 | RECHERCHIERTE SACHGEBIETE (Int.Cl.7) H04L H04B |

Der vorliegende Recherchenbericht wurde für alle Patentansprüche erstellt

| Recherchenort | Abschlußdatum der Recherche | Prüfer |
|---|---|---|
| BERLIN | 27. Mai 2002 | Martínez Martínez, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 1 231 732 A1**

ANHANG ZUM EUROPÄISCHEN RECHERCHENBERICHT
ÜBER DIE EUROPÄISCHE PATENTANMELDUNG NR.

EP 02 36 0038

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2002

| Im Recherchenbericht angeführtes Patentdokument | Datum der Veröffentlichung | Mitglied(er) der Patentfamilie | Datum der Veröffentlichung |
|---|---|---|---|
| WO 0106663 A | 25-01-2001 | AU 1568301 A<br>WO 0106663 A2 | 05-02-2001<br>25-01-2001 |
| WO 9520845 A | 03-08-1995 | AU 1463995 A<br>EP 0694233 A1<br>WO 9520845 A1<br>JP 8510613 T | 15-08-1995<br>31-01-1996<br>03-08-1995<br>05-11-1996 |

EPO FORM P0461

Für nähere Einzelheiten zu diesem Anhang : siehe Amtsblatt des Europäischen Patentamts, Nr.12/82